(19) Europäisches Patentamt
European Patent Office
Office européen des brevets

(11) **EP 3 704 790 B1**

(12) **EUROPÄISCHE PATENTSCHRIFT**

(45) Veröffentlichungstag und Bekanntmachung des Hinweises auf die Patenterteilung:
**13.10.2021 Patentblatt 2021/41**

(21) Anmeldenummer: **18796823.5**

(22) Anmeldetag: **20.10.2018**

(51) Int Cl.:
*H02P 21/26* (2016.01)  *H02P 6/185* (2016.01)

(86) Internationale Anmeldenummer:
**PCT/AT2018/060250**

(87) Internationale Veröffentlichungsnummer:
**WO 2019/084584 (09.05.2019 Gazette 2019/19)**

(54) **VERFAHREN ZUR ERMITTLUNG DER ROTORPOSITION VON SYNCHRON LAUFENDEN ELEKTRISCHEN MASCHINEN OHNE MECHANISCHEN GEBER**

METHOD FOR DETERMINING THE ROTOR POSITION OF SYNCHRONOUSLY RUNNING ELECTRIC MACHINES WITHOUT A MECHANICAL SENSOR

PROCÉDÉ DE DÉTERMINATION DE LA POSITION DU ROTOR DE MACHINES ÉLECTRIQUES SYNCHRONES SANS CAPTEUR MÉCANIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.11.2017 AT 509292017**

(43) Veröffentlichungstag der Anmeldung:
**09.09.2020 Patentblatt 2020/37**

(73) Patentinhaber: **Schrödl, Manfred**
**7223 Sieggraben (AT)**

(72) Erfinder: **Schrödl, Manfred**
**7223 Sieggraben (AT)**

(74) Vertreter: **Graschitz, Roland et al**
**Felfernig und Graschitz Rechtsanwälte GmbH**
**Reichsratsstraße 15**
**1010 Wien (AT)**

(56) Entgegenhaltungen:
WO-A1-2009/103662   US-A1- 2007 132 415

- CARUANA C ET AL: "Sensorless flux position estimation at low and zero frequency by measuring zero-sequence current in delta connected cage induction machines", CONFERENCE RECORD OF THE 2003 IEEE INDUSTRY APPLICATIONS CONFERENCE. 38TH. IAS ANNUAL MEETING . SALT LAKE CITY, UT, OCT. 12 - 16, 2003; [CONFERENCE RECORD OF THE IEEE INDUSTRY APPLICATIONS CONFERENCE. IAS ANNUAL MEETING], NEW YORK, NY : IEEE, US, Bd. 3, 12. Oktober 2003 (2003-10-12), Seiten 1742-1749, XP010676230, DOI: 10.1109/IAS.2003.1257791 ISBN: 978-0-7803-7883-4

**Beschreibung**

Die Erfindung betrifft ein Verfahren zur drehgeberlosen Ermittlung der Rotorposition einer synchron laufenden Drehstrommaschine und eine Schaltungsanordnung hierfür, wie sie in den Ansprüchen 1 und 9 beschrieben sind

Synchron laufende elektrische Maschinen, wie Permanentmagnet-Synchronmaschinen, Synchron-Reluktanzmaschinen, elektrisch erregte Synchronmaschinen etc. benötigen zur hochwertigen feldorientierten Regelung üblicherweise die Information über die Rotorposition, um einen winkel- und betragsmäßig geeigneten Stromraumzeiger in die von der feldorientierten Regelung vorgebbaren Richtung mittels Umrichter über stromeinprägende Methoden gemäß dem Stand der Technik einzuprägen, wobei die der feldorientierten Regelung unterlagerte Stromregelung einen Spannungsraumzeiger berechnet, der unter Verwendung einer Kombination von mittels Umrichter darstellbaren Spannungsraumzeigern näherungsweise eingestellt wird. Die darstellbaren Spannungsraumzeiger sind beispielsweise im Falle eines dreisträngigen Umrichters 6 (sechs) aktive Raumzeiger mit gleicher Länge (die proportional zu der Zwischenkreisspannung des Umrichters sind), und jeweils um 60 Grad (elektrisch) versetzt sind, sowie 2 (zwei) Nullraumzeiger, die die Länge Null aufweisen. Letztere treten auf, wenn alle drei Halbbrücken des dreisträngigen Umrichters auf gleichem Potenzial liegen, also entweder auf positivem oder auf negativem Zwischenkreispotenzial. Die Kombination solcher Spannungsraumzeiger, die sich üblicherweise nach Ablauf einer gewissen Zeit wiederholen, wird in der Literatur PWM (Pulsweitenmodulation) genannt. Klassische PWM-Verfahren verwenden drei der zuvor genannten darstellbaren Spannungsraumzeiger, die in der Umgebung des von der Regelung gewünschten Spannungsraumzeigers liegen. Dies sind der rechte und linke benachbarte aktive Raumzeiger sowie ein Nullraumzeiger.

Weiters ist bekannt, dass die Stranginduktivitäten der genannten Maschinen in Abhängigkeit von der Rotorposition schwanken. Dies wurde bereits zur Rotorpositionserfassung ohne Drehgeber herangezogen. Beispielsweise ist aus dem Stand der Technik (z.B. [ Schrödl,M.: "Sensorless Control of A.C. Machines", VDI Fortschrittberichte, Reihe 21, Nr. 117, VDI-Verlag 1992], oder [Rajashekara, K. et al. "Sensorless Control of AC Motor Drives", IEEE Press, Piscataway, USA, 1996, ISBN 0-7803-1046-2]) bekannt, dass die Stromanstiege im Pulsmuster in gewissem Ausmaß von den Stranginduktivitäten abhängen, die ihrerseits aufgrund von geometrischer Achsigkeit (Reluktanz, durch unterschiedliche magnetische Leitwerte in Abhängigkeit von der Rotorposition) und/oder durch Sättigungseffekte im magnetisch leitfähigen Material in Rotor und Stator von der Rotorposition abhängen.

Nachteilig an den Verfahren zur drehgeberlosen Ermittlung der Rotorposition speziell bei kleinen Drehzahlen war bisher, dass Messimpulse oder Messsequenzen eingeprägt werden, die akustische Abstrahlungen in Form von Pfeifen oder Rauschen hervorrufen und zusätzlich die Stromregelung stören.

Grundsätzlich sind Umrichter-Stromregelungen bekannt, bei denen ausschließlich in drei unterschiedliche Raumzeigerrichtungen wirkende aktive Umrichterzustände ohne Kurzschlusszustände zur näherungsweisen Einstellung des von der Stromregelung vorgegebenen Spannungsraumzeigers verwendet werden. Nachteilig ist hierbei, dass diese Pulsmuster bisher nur zum Zwecke der Stromregelung verwendet werden konnten und somit für hochwertige Regelungen weiterhin Drehgeber zur Erfassung der Rotorposition nötig waren.

Weiters ist aus dem Bericht "sensorless flux position estimation at low and zero frequency by measuring zero-sequence current in delta connected cage induction machines" von Caruana c et all (ISBN: 978/0-7803-7883-4) ein Verfahren zur Bestimmung der Position eines Asynchronmotors beschrieben, bei dem Testvektoren im Abstand von 120° (V1,V3,V5) in den Motor injiziert werden. Dabei werden Stromänderungen gemessen, die mit sin(wt) oder sin 2wt) (cf Gleichung) multipliziert werden. Die Phasenpositionssignale werden in der Gleichung zur Bestimmung der Motorposition herangezogen.

Aus der WO 2009/103662 A1 ist das Messen von Stromänderungen infolge von Testvektoren für eine Synchronmaschine beschrieben, wobei die "Zero Sequence" der Spannung zur Positionsbestimmung herangezogen wird.

Die US 2007/132415 A1 offenbart die Injektiion von Testvektoren und die Auswertung der "Zero Sequence"-Kompnente.

Aufgabe der Erfindung ist es, ein Verfahren zur drehgeberlosen Rotorpositionsermittlung bis einschließlich Stillstand und eine Schaltungsanordnung hierfür zu schaffen, das diese Nachteile vermeidet und gleichzeitig einen einfachen Aufbau aufweist.

DIE AUFGABE WIRD DURCH DIE ERFINDUNG GELÖST.

In der Erfindung wird erstmalig die z.B. für Netzspannungsanalysen verwendete Theorie der Symmetrischen Komponenten in einem völlig neuen Anwendungsfeld, nämlich zur Analyse und Auswertung von umrichterbedingten Stromanstiegsverläufen im Hinblick auf Rotorpositionsauswertung aus Induktivitätsschwankungen unter Berücksichtigung von induzierten Spannungen angewendet. Daraus ergeben sich überraschende Möglichkeiten und Vorteile, die bisher nicht bekannt waren. Die Anwendung erfordert die Einführung eines neuen, bisher nicht bekannten Koordinatensystems in der komplexen Raumzeigerebene, das mit dem neuen technischen Begriff "Messrichtungsfestes Koordinatensystem" bezeichnet wird. (Bekannte bisher verwendete Koordinatensysteme sind z.B. das statorfeste, das rotorfeste oder das drehfeldfeste Koordinatensystem).

Das erfindungsgemäße Verfahren zur drehgeberlosen Ermittlung der Rotorposition einer synchron laufenden Drehstrommaschine ist dadurch gekennzeichnet, dass die erfassten Stromanstiege in einer Rechnereinheit in ein messrichtungsfestes Koordinatensystem und weiter in symmetrischen Komponenten transformiert werden und zumindest eine der aus diesen Stromanstiegen berechneten symmetrischen Komponenten, welche mit doppelter elektrischer Drehzahl, einfacher elektrischer Drehzahl und mit Drehzahl Null umlaufen, zur Rotorpositionsbestimmung herangezogen wird, wobei zumindest die bis Drehzahl Null funktionierende und mit doppelter elektrischer Drehzahl umlaufende symmetrische Komponente ausgewertet und daraus die elektrische Rotorposition der Maschine bestimmt wird.

Vorteilhaft ist hierbei, dass durch die Verwendung von vorzugsweise drei aktiven Zeigen nämlich bis zur Drehzahl Null ausreichend lange Messzeiten zur Bestimmung von Stromanstiegen generiert werden, wobei diese Information erfindungsgemäß zur hochwertigen und störgeräuschlosen Bestimmung der Rotorposition genutzt wird, und damit ohne teure und ausfallsanfällige mechanische Drehgeber bzw. Sensoren das Auslangen gefunden wird, d.h., dass nur aufgrund von Messungen der Ströme zum Zwecke der Bestimmung von Stromanstiegen, wie es aus dem Stand der Technik beispielsweise über Messwiderstände bekannt ist, die umrichtergespeiste Maschine geregelt und gesteuert wird. Somit wird auch ein einfacher mechanischer Aufbau der Maschine möglich, da keine Positionierung von Positionssensoren bzw. Drehgebern benötigt wird, die auch noch entsprechend kalibriert werden müssten.

Grundidee dabei ist, eine spezielle PWM zu verwenden, die nur aktive Spannungsraumzeiger verwendet und diese, über den Stand der Technik hinausgehend, zur Ermittlung der Rotorposition durch Auswertung der Stromanstiege innerhalb der PWM heranzuziehen, ohne dass zusätzliche Messimpulse oder Messsequenzen benötigt werden und die Stromregelung nicht gestört wird. Der Vorteil dabei ist, dass dadurch keine zusätzlichen akustischen Störungen verursacht werden.

Eine PWM, die keine Nullraumzeiger verwendet, ist in [Öst. Patent AT 503.602B1 "Verfahren und Schaltungsanordnung zur näherungsweisen Einstellung eines Spannungsraumzeigers"] (/1/) beschrieben. Dabei ist ein Verfahren zur näherungsweisen Einstellung des Spannungsraumzeigers angegeben, das ausschließlich aktive Raumzeiger verwendet. Es wird also kein Nullraumzeiger wie bei üblichen PWM-Mustern verwendet. Über diesen Stand der Technik hinausgehend, wird in dieser Erfindung gezeigt, wie eine solche Spannungssequenz unter ausschließlicher Verwendung von aktiven Spannungsraumzeigern ausgewertet werden kann, um neben der näherungsweisen Einstellung des von der Stromregelung gewünschten Spannungsraumzeigers unter Erfassung von Stromanstiegen, die während der aktiven Spannungsraumzeiger auftreten und messtechnisch zugänglich sind, zusätzlich Information über die aktuelle Rotorposition zu ermitteln.

Durch die Kombination von vorzugsweise drei aktiven Zeigern besteht der Vorteil, dass bei kleinen resultierenden Spannungsaussteuergraden, wie sie vor allem im Tiefdrehzahlbereich auftreten, die Zeitdauer der aktiven Zeiger so lange bleibt, dass Stromanstiegsauswertungen mit guter Genauigkeit möglich sind. Dies ist bei klassischen PWM-Verfahren bei kleinen Spannungsaussteuergraden nicht möglich. Speziell sind in der gegenständlichen Erfindung bei Aussteuergrad "Null" (keine Spannung im Mittel über eine PWM-Periode) alle drei beteiligten aktiven Zeiger (z.B. u+, v+, w+ oder u-, v-, w-) gleich lang anliegend und sehr gut im Hinblick auf Stromanstiegsauswertung auswertbar. In /1/ ist angegeben, wie aus einem gewünschten Spannungsraumzeiger, der z.B. aus der Stromregelung als Regelgröße berechnet wird, die Einschaltzeiten der Zeiger u+, v+, w+ (bzw. alternativ u-, v-, w-) dieser speziellen PWM ermittelt werden können.

Die Erfassung der Stromanstiege kann in verschiedenen Topologien erfolgen. Beispielsweise werden in einer Ausgestaltung der Erfindung die Stromanstiege zumindest in zwei Phasen zwischen dem Ausgang der Halbbrücken und dem Motoranschluss erfasst. Diese Anordnung bietet den Vorteil, dass sehr viele Industrieumrichter eine derartige Stromerfassung aufweisen.

In einer weiteren Ausgestaltung der Erfindung werden die Stromanstiege in den Fußpunkten von mindestens zwei Halbbrücken des Umrichters erfasst. Dies ist von Vorteil, wenn die auswertende Recheneinheit potenzialmäßig am Zwischenkreis angebunden ist, weil dadurch eine potenzialbehaftete Strommessung mit preiswerter Messtechnik eingesetzt werden kann.

Ist eine besonders preiswerte Realisierung, wie etwa bei Anwendungen mit hohen Stückzahlen, nötig, können in einer weiteren Ausgestaltung der Erfindung die Stromanstiege im Zwischenkreis des Umrichters erfasst werden.

Eine hochwertige Auswertung ist in einer weiteren Ausgestaltung der Erfindung gezeigt. Dabei wird unter Verwendung der Theorie der Symmetrischen Komponenten zusätzlich zur mit doppelter elektrischer Drehzahl umlaufenden Komponente auch die mit einfacher elektrischer Drehzahl umlaufende Komponente ausgewertet. Der Vorteil bei dieser Ausgestaltung ist, dass die Rotorposition über zwei Kanäle berechnet wird, wobei der Informationskanal, der die mit einfacher Rotordrehzahl umlaufende Komponente auswertet, ein Signal liefert, das mit steigender Drehzahl verbesserte Information enthält. Wie erwähnt, liefert der Informationskanal, der die mit doppelter Rotordrehzahl umlaufende Komponente auswertet, eine über die Drehzahl weitgehend konstante Qualität.

In einer Weiterbildung der Erfindung wird eine Auswertung bei unvollständiger Erfassung der Stromanstiege, vorzugsweise ausschließlicher Erfassung der messrichtungsparallelen Stromanstiegsraumzeigerkomponenten vorgenommen. Dies ist etwa der Fall, wenn die Strommessung im Zwischenkreis über ein einziges Messelement erfasst wird. Dabei wird die Wirkung der nicht erfassten nicht-messrichtungsparallelen Stromanstiegsraumzeigerkomponenten durch eine Ersatzfunktion, welche die mit einfacher Rotordrehzahl umlaufende strom- und drehzahlabhängige symmetrische Komponente nachbildet, näherungsweise berücksichtigt. Der Vorteil dabei ist, dass eine sehr kostengünstige Lösung mit guter Genauigkeit der Rotorpositionserfassung möglich ist.

Gemäß einer weiteren Ausgestaltung der Erfindung werden die nach den Regeln der symmetrischen Komponenten ermittelten Größen einer Recheneinheit zugeführt werden, die daraus zumindest eine der Zustandsgrößen "Rotorlage", "Rotordrehzahl", "Rotorbeschleunigung" und/oder "Lastmoment" errechnet. Damit wird es möglich, neben einer Verbesserung der Rotorlage durch das Zustandsmodell auch die Rotordrehzahl und optional das Lastmoment und/oder die Winkelbeschleunigung der Motorwelle mit guter Dynamik zu ermitteln.

Schließlich wird in einer weiteren Ausgestaltung der Erfindung die mittlere inverse differenzielle Induktivitätskennzahl zur Überwachung des Maschinenzustandes im Hinblick auf unzulässige Impedanzverhältnisse verwendet. Damit können beispielsweise Windungskurzschlüsse, Leitungsunterbrechungen etc. sehr rasch erkannt und geeignete Maßnahmen rechtzeitig eingeleitet werden.

Weiters wird die Aufgabe der Erfindung durch eine Schaltungsanordnung gelöst, bei der die Stromerfassungseinheit mit einer Strom- und Stromanstiegsauswertung verbunden ist, die einerseits mit einer Transformationseinheit zur Transformation von Stromanstiegen ins messrichtungsfeste Koordinatensystem verbunden ist und andererseits mit einer Stromregelung zur Übergabe der ausgewerteten Ströme verbunden ist, und dass die Transformationseinheit mit einer Auswertungseinheit zur Auswertung symmetrischer Komponenten verbunden ist, die wiederum mit einem Zustandsmodell zur Übergabe des doppelten Drehwinkels und gegebenenfalls zusätzlich eines einfachen Drehwinkels gekoppelt ist und das Zustandsmodell zur Weiterleitung eines Drehwinkel, einer Drehzahl und optional einer Größe mit einer feldorientierten Regelung verbunden ist, worauf die Regelung unter Weitergabe von Stromsollwerten mit der Stromregelung verbunden ist und die Stromregelung mit einer ausschließlich aktive Spannungsraumzeiger nützende PWM-Einheit, die zur Verarbeitung des vom Stromregler übergebenden Sollspannungsraumzeigers 22 ausgebildet ist, verbunden ist, und diese mit dem Wechselrichterteil zur Steuerung verbunden ist.

Vorteilhaft ist hierbei, dass dadurch ein einfacher und kostengünstiger Aufbau erreicht wird. Ein weiterer Vorteil liegt darin, dass aus den Stromanstiegen symmetrische Komponenten berechnet werden, welche mit doppelter elektrischer Drehzahl, einfacher elektrischer Drehzahl und mit Drehzahl Null umlaufen, wobei zumindest die bis Drehzahl Null funktionierende und mit doppelter elektrischer Drehzahl umlaufende symmetrische Komponente ausgewertet und daraus die elektrische Rotorposition der Maschine (4) bestimmt wird, sodass keinerlei Positionssensoren für die Ermittlung der Rotorposition benötigt werden, wodurch Kosten und vor allem fehleranfällige Bauelemente eingespart werden können.

Schließlich ist eine Ausbildung von Vorteil, bei der die Auswertungseinheit zur Übergabe der inversen Induktivitätskennzahl mit der Überwachungseinheit verbunden ist. Dadurch wird eine zusätzliche Motorüberwachung auf einfache Art und Weise möglich.

Hinzuweisen ist, dass natürlich beispielsweise die Strommessung in verschiedenen Varianten realisiert werden kann, wie sie in den Patentansprüchen (2) bis (4) angegeben sind.


DIE AUFGABE WIRD DURCH DIE ERFINDUNG GELÖST.


Die erfindungsgemäße Schaltungsanordnung ist dadurch gekennzeichnet, dass eine über einen Umrichter gespeiste synchron laufende Drehstrommaschine vorliegt, wobei das System mit einer Strommessung in einer der besagten Varianten ausgeführt ist und die Strommessungen einem Rechner zugeführt werden, die die Auswertungen nach der Theorie der symmetrischen Komponenten vornimmt und als Ergebnis zumindest die Rotorlage, oft auch die Rotordrehzahl und gegebenenfalls eine Lastmomentschätzung oder weitere Zustandsgrößen für die feldorientierte Regelung, welche auf dem Rechnersystem implementiert ist, zur Verfügung stellt.

Die Erfindung wird anhand eines in der Zeichnung dargestellten Ausführungsbeispiels näher erläutert.

Es zeigt:


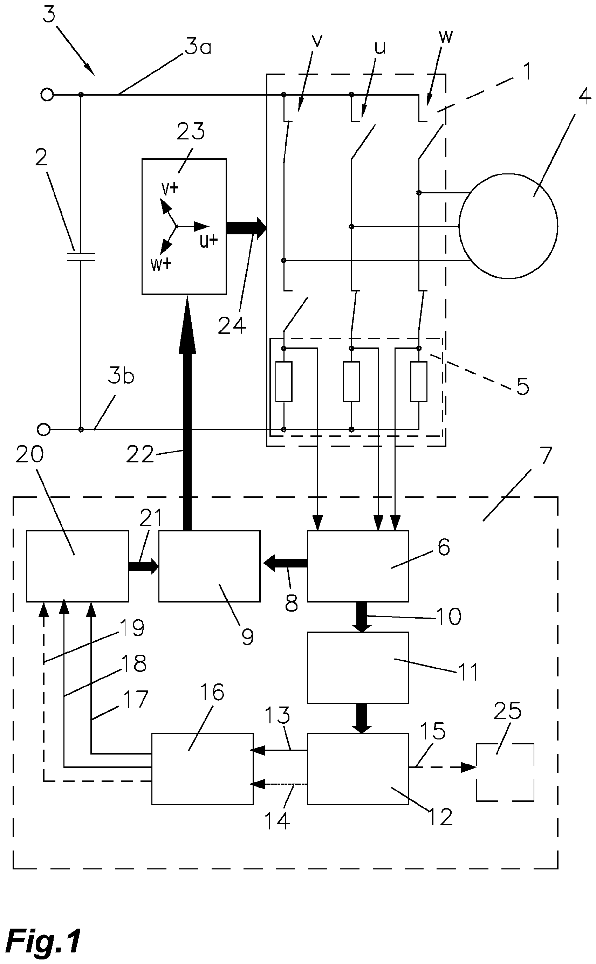

Fig. 1 ein Schaltbild zur drehgeberlosen Ermittlung der Rotorposition einer synchron laufenden Drehstrommaschine, in vereinfachter, schematischer Darstellung.


In Fig. 1 wird ein mit einem Zwischenkreiskondensator 2 ausgestatteter Umrichter mit Zwischenkreisspannung zwischen den Anschlusspunkten 3a und 3b über einen vorzugsweise dreiphasigen Wechselrichterteil 1 mit einer synchron laufenden elektrischen Maschine 4 verbunden. Eine Stromerfassungseinheit 5 führt die erfassten Ströme einer Strom- und Stromanstiegsauswertung 6 in einer Recheneinheit 7 zu, welche einerseits die ausgewerteten Ströme 8 an eine Stromregelung 9 und andererseits die ausgewerteten Stromanstiege 10 an eine Transformationseinheit 11 weiterleitet. Die Transformationseinheit 11 transformiert die Stromanstiege 10 ins messrichtungsfeste Koordinatensystem und leitet sie an eine Auswertungseinheit 12 weiter, welche gemäß der Theorie der Symmetrischen Komponenten zumindest eine der Komponenten, welche mit doppelter elektrischer Drehzahl, mit einfacher elektrischer Drehzahl und mit Drehzahl Null umlaufen, auswertet.

Vorzugsweise wird zumindest jene Komponente ausgewertet, die mit doppelter elektrischer Drehzahl umläuft. Daraus wird dann entsprechend Gleichung GL1 (wie zuvor beschrieben) der Raumzeiger $\xi$!NP bzw. dessen Real- und Imaginärteil, gemäß den dargelegten Vorschriften, berechnet und der doppelte elektrischen Drehwinkel 13 berechnet. Dabei ist es auch möglich, dass der Raumzeiger $\xi$EMK ebenfalls ausgewertet wird, sodass sich daraus der einfache elektrische Drehwinkel 14 ergibt. Erfolgt auch noch eine Auswertung der Nullkomponente, so liefert diese die mittlere inverse differenzielle Induktivitätskennzahl $\xi$o 15, welche zur Motorüberwachung in einer optionalen Überwachungseinheit 25 verwendet werden kann. Die ermittelten Winkelinformationen werden, vorzugsweise über ein Zustandsmodell 16, welches neben einem verbessertem elektrischen Drehwinkel 17 auch die Drehzahl 18 und optional weitere Größen 19, vorzugsweise das Lastmoment und/oder die Winkelbeschleunigung der Motorwelle ermittelt, der feldorientierten Regelung 20 zur Verfügung gestellt. Diese feldorientierte Regelung 20 berechnet aufgrund ihrer Sollwerte (z.B. Drehzahl, Drehmoment) gemäß dem implementierten Regelalgorithmus Stromsollwerte 21 und liefert diese als Sollwerte an die Stromregelung 9, welche daraus unter Verwendung der ausgewerteten Ströme 8 einen Sollspannungsraumzeiger 22 berechnet. Dieser wird in der beschriebenen PWM-Einheit 23 in ein Pulsmuster umgesetzt, welches ausschließlich aktive Spannungsraumzeiger verwendet und das die Halbbrücken des Wechselrichterteils 1 über Ansteuerbefehle 24 steuert.

Wesentlich bei der Erfindung ist, dass die Maschine 4 drehgeberlos bzw. positionssensorlos ausgebildet ist und die Regelung und Steuerung nur über die Stromerfassung erfolgt. Eine allfällig vorhandene Spannungsmessung kann zur Verbesserung der Genauigkeit der Auswertung optional verwendet werden. Dadurch wird ein sehr kostengünstiger und einfacher Aufbau für die Maschine 4 erreicht.

Erfindungsgemäß ist ein Verfahren zur drehgeberlosen Ermittlung der Rotorposition einer synchron laufenden Drehstrommaschine in Fig. 1 beschrieben, die über einen Umrichter gespeist wird. Die erfassten Stromanstiege 10 werden in ein messrichtungsfestes Koordinatensystem transformiert und gemäß Theorie der symmetrischen Komponenten zumindest eine der aus diesen Stromanstiegen 10 berechneten Komponenten ausgewertet. Die Komponenten laufen dabei mit doppelter elektrischer Drehzahl, einfacher elektrischer Drehzahl und mit Drehzahl Null um. Vorzugsweise wird die bis Drehzahl Null funktionierende und mit doppelter elektrischer Drehzahl umlaufende Komponente und daraus nach bekannten Methoden der Mathematik die elektrische Rotorposition bestimmt

Eine derartige Messung und Auswertung kann wie folgt erfolgen:
Legt man einen Spannungsraumzeiger u+ (Umrichterstellung 1/0/0 des Wechselrichters 1) an die Maschine an, so reagiert sie mit einem Stromanstiegsraumzeiger $(\Delta i/\Delta t)u+ = \xi v$ .

(Messrichtung des Spannungsraumzeigers $u = 0°$ im statorfesten Koordinatensystem $\alpha,\beta$ ). Der Stromanstiegsraumzeiger $(\Delta i/\Delta t)$ ist bekanntermaßen definiert als

$$(\Delta i/\Delta t) = 2/3*\{(\Delta iu/\Delta t) + (\Delta iv/\Delta t)*\exp (+j*120°) + (\Delta iw/\Delta t)*\exp (-j*120°)\}$$

mit den jeweiligen möglichst zeitgleich zu ermittelnden Stromanstiegen $(\Delta iu/\Delta t)$ in Strang u, $(\Delta iv/\Delta t)$ in Strang v und $(\Delta iw/\Delta t)$ in Strang w.

Legt man einen Spannungsraumzeiger v+ (Umrichterstellung 0/1/0) an die Maschine 4 an, so reagiert sie mit einem Stromanstiegsraumzeiger $(\Delta i/\Delta t)v+ = \xi v$ . (Messrichtung v=120°)

Legt man einen Spannungsraumzeiger w+ (Umrichterstellung 0/0/1) an die Maschine 4 an, so reagiert sie mit einem Stromanstiegsraumzeiger $(\Delta i/\Delta t)w+ = \xi w$ . (Messrichtung w=240°)

Wäre die Maschine 4 im Stillstand und hätte sie keine Achsigkeit sowie keinen Widerstand, so bildeten die Raumzeiger $\xi u, \xi v, \xi w$ in einem gemeinsamen statorfesten Koordinatensystem $\alpha,\beta$ ein um je 120° versetztes Zeigertripel.

Stellt man die drei Zeiger in einem "messrichtungsfesten Koordinatensystem" dar (Reelle Achse des messrichtungsfesten Koordinatensystems in Richtung des jeweiligen Mess-Spannungsraumzeigers), so bilden die so dargestellten Raumzeiger $\xi uu, \xi vv, \xi ww$ für den Fall "Maschine 4 im Stillstand, keine Achsigkeit sowie kein Widerstand" drei parallele, gleich lange Zeiger in der reellen Achse.

Wäre die Maschine 4 im Stillstand und hätte eine Achsigkeit (kleinere Induktivität der Statorspulen z.B. in d-Richtung des Rotors (d-Achse achsparallel zur betrachteten Statorspulenachse), größere Induktivität in q-Richtung des Rotors), würden die drei Raumzeiger $\xi uu, \xi vv, \xi ww$ eine zusätzliche, mit der doppelten Rotorlage etwa cosinusförmig variierende Länge aufweisen. Die Abhängigkeit von der doppelten Rotorlage kann man sich leicht erklären, da die hohe Induktivität zweimal pro elektrischer Umdrehung auftritt (in positiver und negativer q-Achse), analog die niedrige Induktivität in positiver und negativer d-Achse. (Die Definition der Richtung der d-Achse ist an sich beliebig, aber fest bezüglich des Rotors).

Würde sich die Maschine 4 drehen und hätte keine Achsigkeit (Induktivitäten der Statorspulen unabhängig von der Rotorposition), so erzeugt eine Rotormagnetisierung (bei permanentmagneterregten und elektrisch erregten Maschinen) bzw. ein rotororientierter Betriebsstrom über dem Statorwiderstand (bei permanentmagneterregten, elektrisch erregten und reluktanten Maschinen) Spannungskomponenten in den Statorspulen, die synchron mit der Rotorlage umlaufen und entsprechende Stromanstiegsanteile, die ebenfalls synchron mit der einfachen Rotorlage der Maschine 4 umlaufen. Die drei Raumzeiger $\xi$uu, $\xi$vv, $\xi$ww würden in diesem Fall eine zusätzliche, mit der einfachen Rotorlage etwa cosinusförmig variierende Länge aufweisen.

Lässt man nun eine achsige Maschine 4 rotieren, so überlagern sich beide Effekte und die Raumzeiger $\xi$uu, $\xi$vv, $\xi$ww enthalten einen in allen drei Zeigern gleichen Offsetanteil $\xi$o, einen mit Rotordrehzahl umlaufenden Anteil $\xi$EMK und einen mit doppelter Rotordrehzahl umlaufenden Anteil $\xi$!NP .

In Anlehnung an die bekannten Rechenregeln für symmetrische Komponenten [Oswald, B.: "Berechnung von Drehstromnetzen - Berechnung stationärer und nichtstationärer Vorgänge mit Symmetrischen Komponenten und Raumzeigern". Vieweg + Teubner, 2009, ISBN 978-3-8348-0617-8] können die genannten 3 Komponenten (im Folgenden "INFORM-Raumzeiger", "EMK-Raumzeiger" und "Mittlere inverse differenzielle Induktivitätskennzahl" genannt) wie folgt ermittelt werden:

$$\text{„INFORM-Raumzeiger“} \qquad \xi INF = 1/3*[\ \xi uu + \xi vv*exp\ (-j*120°) + \xi ww*exp(+j*120°)] \qquad (1)$$

$$\text{„EMK-Raumzeiger“} \qquad \xi EMK = 1/3*[\ \xi uu + \xi vv*exp\ (+j*120°) + \xi ww*exp(-j*120°)] \qquad (2)$$

$$\text{„Mittlere inverse differenzielle Induktivitätskennzahl“} \qquad \xi o \quad = 1/3*[\ \xi uu + \xi vv + \xi ww] \qquad (3)$$

Das Argument des komplexen INFORM-Raumzeigers $\xi$!NP entspricht der doppelten Rotorposition 2y, üblicherweise noch zu korrigieren um einen messtechnisch oder durch ein Modell zu ermittelnden last- und drehzahlabhängigen Korrekturterm

$$2\gamma= arg(\xi INF\ )\ + \Delta\gamma INF(Last, Drehzahl) \qquad (4)$$

Der Betrag des komplexen INFORM-Raumzeigers $\xi$!NP ist weitgehend drehzahlunabhängig, und daher kann der komplexe INFORM-Raumzeiger $\xi$!NP vorzugsweise bei kleinen Drehzahlen ausgewertet werden.

Das Argument des komplexen EMK-Raumzeigers $\xi$EMK entspricht der einfachen Rotorposition y, gegebenenfalls noch zu korrigieren um einen messtechnisch oder durch ein Modell zu ermittelnden last- und drehzahlabhängigen Korrekturterm

$$\gamma= arg(\xi EMK\ )\ + \Delta\gamma EMK(Last, Drehzahl) \qquad (5)$$

Der Betrag des komplexen EMK-Raumzeigers $\xi$EMK zufolge der induzierten Spannung sinkt mit fallender Drehzahl, und daher kann der komplexe EMK-Raumzeiger $\xi$EMK vorzugsweise bei höheren Drehzahlen ausgewertet werden.

Die mittlere differenzielle Induktivitätskennzahl $\xi$o kann zur Überwachung des Betriebspunktes oder zur Erkennung von Fehlern oder unzulässigen Parameterkonstellationen (Impedanzen), etwa zur Erkennung von Windungskurzschlüssen, Wicklungsunterbrechungen etc. verwendet werden.

Die gemessenen Stromanstiegsraumzeiger haben im messrichtungsfesten Koordinatensystem folgende Real- und Imaginärteile (Anmerkung: „sqrt(3)" bedeutet die Wurzel aus 3):
Messung u+ (alternativ u-)

$$\xi uu = Re\{\ \xi uu\ \} + j*Im\{\ \xi uu\ \}\ ,$$

wobei

$$Re\{ \xi uu \} = (\Delta iu/\Delta t)u+$$

$$Im\{ \xi uu \} = 1/sqrt(3)*[(\Delta iv/\Delta t) - (\Delta iw/\Delta t)]u+$$

Messung v+ (alternativ v-)

$$\xi vv = Re\{ \xi vv \} + j*Im\{ \xi vv \},$$

wobei

$$Re\{ \xi vv \} = (\Delta iv/\Delta t)v+$$

$$Im\{ \xi vv \} = 1/sqrt(3)*[(\Delta iw/\Delta t) - (\Delta iu/\Delta t)]v+$$

Messung w+ (alternativ w-)

$$\xi ww = Re\{ \xi ww \} + j*Im\{ \xi ww \},$$

wobei

$$Re\{ \xi ww \} = (\Delta iw/\Delta t)w+$$

$$Im\{ \xi ww \} = 1/sqrt(3)*[(\Delta iu/\Delta t) - (\Delta iv/\Delta t)]w+$$

Damit liefert Gleichung GL1:

$$Re\{\xi INF\} = 1/3*\{ (\Delta iu/\Delta t)u+ -1/2*(\Delta iv/\Delta t)v+ -1/2*(\Delta iw/\Delta t)w+ +1/2*[(\Delta iw/\Delta t) - (\Delta iu/\Delta t)]v+ -$$

$$-1/2*[(\Delta iu/\Delta t) - (\Delta iv/\Delta t)]w+ \}$$

$$Im\{\xi INF\} = 1/3*\{ 1/sqrt(3)*[(\Delta iv/\Delta t) - (\Delta iw/\Delta t)]u+ -sqrt(3)/2*(\Delta iv/\Delta t)v+ +sqrt(3)/2*(\Delta iw/\Delta t)w+ -$$

$$-1/[2*sqrt(3)]*[(\Delta iw/\Delta t) - (\Delta iu/\Delta t)]v+ -1/[2*sqrt(3)]*[(\Delta iu/\Delta t) - (\Delta iv/\Delta t)]w+ \}$$

Das Argument arg($\xi$INP) kann durch Arcustangensbildung atan (Im{$\xi$INP} / Re{$\xi$INP} ) berechnet und in Gleichung (4) zur Berechnung des doppelten Rotorwinkels herangezogen werden.
Weiters liefert Gleichung GL2:

$$Re\{\xi EMK\} = 1/3*\{ (\Delta iu/\Delta t)u+ -1/2*(\Delta iv/\Delta t)v+ -1/2*(\Delta iw/\Delta t)w+ -1/2*[(\Delta iw/\Delta t) - (\Delta iu/\Delta t)]v+ +$$

$$+1/2*[(\Delta iu/\Delta t) - (\Delta iv/\Delta t)]w+ \}$$

$$Im\{\xi EMK\} = 1/3*\{ 1/sqrt(3)*[(\Delta iv/\Delta t) - (\Delta iw/\Delta t)]u+ +sqrt(3)/2*(\Delta iv/\Delta t)v+ -sqrt(3)/2*(\Delta iw/\Delta t)w+ -$$

$$-1/[2*sqrt(3)]*[(\Delta iw/\Delta t) - (\Delta iu/\Delta t)]v+ -1/[2*sqrt(3)]*[(\Delta iu/\Delta t) - (\Delta iv/\Delta t)]w+ \}$$

Das Argument arg($\xi$EMK) kann durch Arcustangensbildung atan (Im{^EMK} / Re{^EMK}) berechnet und in Gleichung (5) zur Berechnung des einfachen Rotorwinkels herangezogen werden.

Falls die Stromanstiegsmessungen unvollständig erfasst werden, vorzugsweise falls nur die messrichtungsparallelen Stromanstiege erfasst werden, können jene Terme in Re{ξINF} und Im{ξINP}, welche nicht-messrichtungs-parallele Stromanstiege enthalten, näherungsweise durch Modellierung von Re{ξEMK} und Im{ξEMK} als mit der einfachen Winkelgeschwindigkeit umlaufende cosinus- bzw. sinusförmige Funktionen berücksichtigt werden, die über strom- und drehzahlabhängige Parametrierung festgelegt werden. Dies kann beispielsweise durch eine Referenzmessung ermittelt werden. Dies ermöglicht eine gute Erfassung des doppelten Rotorwinkels auch bei Strom- bzw. Stromanstiegserfassung ausschließlich im Zwischenkreis.

In vorteilhafter Weise ermittelt die Erfindung die Rotorposition einer Umrichter gespeisten synchron laufenden Drehstrommaschine ohne teure und ausfallsanfällige mechanische Drehgeber, wobei für die Stromregelung ausschließlich in drei unterschiedliche Raumzeigerrichtungen wirkende aktive Umrichterzustände ohne Kurzschlusszustände verwendet werden. Dabei werden Stromanstiege der Phasenströme während dieser aktiven Umrichterzustände erfasst und in ein messrichtungsfestes Koordinatensystem transformiert. Messrichtungsfest bedeutet dabei, dass der aktuelle von der Stromregelung vorgegebene Spannungsraumzeiger gleichzeitig auch als Messraumzeiger verwendet wird und die Basis für ein Koordinatensystem bildet, das seine reelle Achse in eben dieser Messrichtung aufweist.

In einer Ausgestaltung der Erfindung wird gemäß der Theorie der symmetrischen Komponenten zumindest eine der aus diesen Stromanstiegen 10 berechneten Komponenten, welche mit doppelter elektrischer Drehzahl, einfacher elektrischer Drehzahl und mit Drehzahl Null umlaufen, vorzugsweise die bis Drehzahl Null funktionierende und mit doppelter elektrischer Drehzahl umlaufende Komponente ausgewertet und daraus nach bekannten Methoden der Mathematik die elektrische Rotorposition bestimmt wird. Dies bietet den großen Vorteil, dass gut auswertbare Stromanstiege ohne zusätzliche Messimpulse vorliegen, welche eine Auswertung im gesamten Betriebsbereich einschließlich Stillstand zulassen.

Die Erfassung der Stromanstiege 10 kann in verschiedenen Topologien erfolgen. Beispielsweise werden in einer Ausgestaltung der Erfindung die Stromanstiege 10 zumindest in zwei Phasen zwischen dem Ausgang der Halbbrücken und dem Motoranschluss erfasst. Diese Anordnung bietet den Vorteil, dass sehr viele Industrieumrichter eine derartige Stromerfassung aufweisen.

Selbstverständlich ist es auch möglich, dass durch entsprechende Anpassung des Wechselrichters 1 auch eine Vollbrücke eingesetzt werden kann.

Der Ordnung halber wird darauf hingewiesen, dass die Erfindung nicht auf die dargestellten Ausführungsvarianten beschränkt ist, sondern auch weitere Ausbildungen beinhalten können.

## Patentansprüche

1. Verfahren zur drehgeberlosen Ermittlung der Rotorposition einer synchron laufenden Drehstrommaschine (4), die über einen Umrichter (3) gespeist ist, wobei für die Stromregelung in unterschiedliche Raumzeigerrichtungen wirkende aktive Umrichterzustände verwendet werden und Stromanstiege (10) der Phasenströme während dieser aktiven Umrichterzustände erfasst werden, **dadurch gekennzeichnet, dass** die erfassten Stromanstiege (10) in einer Rechnereinheit (7) in ein messrichtungsfestes Koordinatensystem und weiter in symmetrische Komponenten transformiert werden und zumindest eine der aus diesen Stromanstiegen (10) berechneten symmetrischen Komponente, welche mit doppelter elektrischer Drehzahl, einfacher elektrischer Drehzahl und mit Drehzahl Null umlaufen, zur Rotorpositionsbestimmung herangezogen wird, wobei zumindest die mit Drehzahl Null funktionierende und mit doppelter elektrischer Drehzahl umlaufende symmetrische Komponente ausgewertet und daraus die elektrische Rotorposition der Maschine (4) bestimmt wird.

2. Verfahren nach Anspruch 1, **dadurch gekennzeichnet, dass** die Stromanstiege zumindest in zwei Phasen zwischen dem Ausgang der Halbbrücken (u, v, w) und dem Motoranschluss erfasst werden.

3. Verfahren nach Anspruch 1, **dadurch gekennzeichnet, dass** die Stromanstiege (10) in den Fußpunkten von mindestens zwei Halbbrücken (u, v, w) erfasst werden.

4. Verfahren nach Anspruch 1, **dadurch gekennzeichnet, dass** die Stromanstiege (10) im Zwischenkreis des Umrichters erfasst werden.

5. Verfahren nach mindestens einem der Ansprüche 1 bis 4, **dadurch gekennzeichnet, dass** zusätzlich zur mit doppelter elektrischer Drehzahl umlaufenden Komponente auch die mit einfacher elektrischer Drehzahl umlaufende Komponente ausgewertet wird.

**6.** Verfahren nach mindestens einem der Ansprüche 1 bis 5, **dadurch gekennzeichnet, dass** bei unvollständiger Erfassung der Stromanstiege (10), vorzugsweise ausschließlicher Erfassung der messrichtungsparallelen Stromanstiegsraumzeigerkomponenten die Wirkung der nicht erfassten vorzugsweise nicht-messrichtungsparallelen Stromanstiegsraumzeigerkomponenten durch eine Ersatzfunktion, welche die mit einfacher Rotordrehzahl umlaufende strom- und drehzahlabhängige symmetrische Komponente nachbildet, näherungsweise berücksichtigt wird.

**7.** Verfahren nach mindestens einem der Ansprüche 1 bis 6, **dadurch gekennzeichnet, dass** die nach den Regeln der symmetrischen Komponenten ermittelten Größen einer Recheneinheit zugeführt werden, die daraus zumindest eine der Zustandsgrößen "Rotorlage", "Rotordrehzahl", "Rotorbeschleunigung" und/oder "Lastmoment" errechnet.

**8.** Verfahren nach mindestens einem der Ansprüche 1 bis 7, **dadurch gekennzeichnet, dass** die mittlere inverse differenzielle Induktivitätskennzahl zur Überwachung des Maschinenzustandes im Hinblick auf unzulässige Impedanzverhältnisse verwendet wird.

**9.** Schaltungsanordnung zur Durchführung des Verfahrens nach mindestens einem der Ansprüche 1 bis 8, **dadurch gekennzeichnet, dass** die Stromerfassungseinheit (5) mit einer Strom- und Stromanstiegsauswertung (6) verbunden ist, die einerseits mit einer Transformationseinheit (11) zur Transformation von Stromanstiegen (10) ins messrichtungsfeste Koordinatensystem verbunden ist und andererseits mit einer Stromregelung (9) zur Übergabe der ausgewerteten Ströme (8) verbunden ist, und dass die Transformationseinheit (11) mit einer Auswertungseinheit (12) zur Auswertung symmetrischer Komponenten verbunden ist, die wiederum mit einem Zustandsmodell (16) zur Übergabe des doppelten Drehwinkels (13) und gegebenenfalls zusätzlich des einfachen Drehwinkels (14) gekoppelt ist und das Zustandsmodell (16) zur Weiterleitung eines Drehwinkel (17), einer Drehzahl (18) und optional einer Größe (19) mit einer feldorientierten Regelung (20) verbunden ist, worauf die Regelung (20) unter Weitergabe von Stromsollwerten (21) mit der Stromregelung (9) verbunden ist und die Stromregelung (9) mit einer ausschließlich aktive Spannungsraumzeiger nützende PWM-Einheit (23), die zur Verarbeitung des vom Stromregler (9) übergebenden Sollspannungsraumzeigers (22) ausgebildet ist, verbunden ist, und diese mit dem Wechselrichterteil (1) zur Steuerung verbunden ist.

**10.** Schaltungsanordnung nach Anspruch 9, **dadurch gekennzeichnet, dass** die Auswertungseinheit (12) zur Übergabe der inversen Induktivitätskennzahl (15) mit der Überwachungseinheit (25) verbunden ist.


## Claims

**1.** Method for encoderless determination of the rotor position of a synchronously running polyphase machine (4) which is fed via an inverter (3), wherein active inverter states acting in different space vector directions are used for current control and current increases (10) of the phase currents are detected during these active inverter states, **characterized in that** the detected current increases (10) are transformed in a calculator unit (7) into a coordinate system fixed to the direction of measurement and further into symmetrical components and at least one of the symmetrical components calculated from these current increases (10), which rotate at double electrical speed, at single electrical speed and at zero speed, is used to determine the rotor position, wherein at least the symmetrical component operating at zero speed and rotating at double electrical speed is evaluated and the electrical rotor position of the machine (4) determined therefrom.

**2.** Method according to claim 1, **characterized in that** the current increases are detected at least in two phases between the output of the half bridges (u, v, w) and the motor connection.

**3.** Method according to claim 1, **characterized in that** the current increases (10) in the low ends of at least two half bridges (u, v, w) are detected.

**4.** Method according to claim 1, **characterized in that** the current increases (10) in the intermediate circuit of the inverter are detected.

**5.** Method according to at least one of claims 1 to 4, **characterized in that**, in addition to the component rotating at double electrical speed, the component rotating at single electrical speed is also evaluated.

**6.** Method according to at least one of claims 1 to 5, **characterized in that**, in the case of incomplete detection of the current increases (10), preferably of exclusive detection of the current increase space vector components parallel to the direction of measurement, the effect of the current increase space vector components not detected, preferably not parallel to the direction of measurement, is approximately taken into account by means of a substitute function that simulates the current- and speed-dependent symmetrical component rotating at single rotor speed.

7. Method according to at least one of claims 1 to 6, **characterized in that** the measured variables determined according to the rules of the symmetrical components are fed to a computing unit which calculates therefrom at least one of the state variables "rotor position", "rotor speed", "rotor acceleration" and/or "load torque".

8. Method according to at least one of claims 1 to 7, **characterized in that** the mean inverse differential inductance characteristic is used to monitor the machine condition with respect to impermissible impedance ratios.

9. Circuit arrangement for carrying out the method according to at least one of claims 1 to 8, **characterized in that** the current detection unit (5) is connected to a current and current increase evaluation unit (6) which is connected on the one hand to a transformation unit (11) for the transformation of current increases (10) into the coordinate system fixed to the measuring direction and on the other hand to a current control unit (9) for transfer of the evaluated currents (8), and **in that** the transformation unit (11) is connected to an evaluation unit (12) for the evaluation of symmetrical components which in turn is coupled to a state model (16) for transfer of the double angle of rotation (13) and optionally additionally of the single angle of rotation (14), and the state model (16) is connected to a field-oriented control unit (20) for transferring an angle of rotation (17), a rotational speed (18) and optionally a measured variable (19), wherein the control unit (20) is connected to the current control (9) with passing on of current set-point values (21), and the current control (9) is connected to a PWM unit (23) that exclusively uses active voltage space vectors and is designed to process the set-point voltage space vector (22) transferred by the current control (9), and the latter is connected to the inverter part (1) for control.

10. Circuit arrangement according to claim 9, **characterized in that** the evaluation unit (12) for transfer of the inverse inductance characteristic (15) is connected to the monitoring unit (25).

**Revendications**

1. Procédé pour la détermination sans capteur de rotation de la position du rotor d'une machine à courant triphasé à fonctionnement synchrone (4), qui est alimentée par un onduleur (3), des états actifs de l'onduleur agissant dans différentes directions de phaseur spatial étant employés pour la régulation de courant et les montées (10) des courants de phase détectées durant ces états actifs de l'onduleur, **caractérisé en ce que** les montées de courant détectées (10) sont transformées, dans une unité de calcul (7), en un système de coordonnées à direction de mesure fixe et aussi en plusieurs composantes symétriques, et au moins une de ces composantes symétriques calculées à partir de ces montées de courant (10), qui tournent avec une vitesse de rotation électrique double, une vitesse de rotation électrique simple et une vitesse de rotation nulle, est employée pour la détermination de la position du rotor, la composante symétrique fonctionnant à vitesse de rotation nulle et tournant à vitesse de rotation électrique double étant alors au moins évaluée et la position électrique de rotor de la machine (4) déterminée à partir de cette évaluation.

2. Procédé selon la revendication 1, **caractérisé en ce que** les montées de courant sont détectées au moins dans deux phases entre la sortie des demi-ponts (u, v, w) et la connexion du moteur.

3. Procédé selon la revendication 1, **caractérisé en ce que** les montées de courant (10) sont détectées dans les bases d'au moins deux demi-ponts (u, v, w).

4. Procédé selon la revendication 1, **caractérisé en ce que** les montées de courant (10) sont détectées dans le circuit intermédiaire de l'onduleur.

5. Procédé selon au moins une des revendications 1 à 4, **caractérisé en ce que** la composante tournant à vitesse de rotation électrique simple est également évaluée en plus de la composante tournant à vitesse de rotation électrique double.

6. Procédé selon au moins une des revendications 1 à 5, **caractérisé en ce que**, en cas de détection incomplète des montées de courant (10), de préférence de détection exclusive des composantes des phaseurs spatiaux de montée de courant parallèles à la direction de mesure, l'action des composantes non détectées des phaseurs spatiaux de montée de courant, de préférence non parallèles à la direction de mesure, soit approximativement prise en compte par une fonction de remplacement, qui reproduit la composante symétrique tournant, en fonction du courant et de la vitesse de rotation, à vitesse de rotation simple du rotor.

7.  Procédé selon au moins une des revendications 1 à 6, **caractérisé en ce que** les grandeurs déterminées selon les règles des composantes symétriques sont fournies à une unité de calcul, qui calcule au moins l'une des grandeurs d'état « Position du rotor », « Vitesse de rotation du rotor », « Accélération du rotor » et/ou « Couple de charge » à partir de ces grandeurs.

8.  Procédé selon au moins une des revendications 1 à 7, **caractérisé en ce que** l'indice d'inductance différentiel inverse moyen est employé pour la surveillance de l'état de la machine en ce qui concerne des rapports d'impédance inadmissibles.

9.  Circuit destiné à l'exécution du procédé selon au moins une des revendications 1 à 8, **caractérisé en ce que** l'unité de détection du courant (5) est reliée à une évaluation de courant et de montée de courant (6), qui est reliée, d'une part, à une unité de transformation (11) destinée à la transformation de montées de courant (10) dans le système de coordonnées à direction de mesure fixe et, d'autre part, à une régulation du courant (9) destinée au transfert des courants évalués (8), et que l'unité de transformation (11) est reliée à une unité d'évaluation (12) destinée à l'évaluation de composantes symétriques, accouplée à son tour avec un modèle d'état (16) destiné au transfert de l'angle de rotation double (13) et, le cas échéant, également de l'angle de rotation simple (14) et le modèle d'état (16) destiné au transfert d'un angle de rotation (17), d'une vitesse de rotation (18) et, en option, d'une grandeur (19) relié à une régulation par orientation de champ (20), où la régulation (20) transférant les valeurs de consigne du courant (21) est reliée à la régulation de courant (9) et la régulation de courant (9) est reliée à une unité MLI (23) utilisant un phaseur spatial de tension exclusivement actif, qui est conçue pour le traitement du phaseur spatial de tension de consigne (22) transféré par le régulateur de courant (9), et celle-ci est reliée avec l'élément onduleur (1) en direction de la commande.

10. Circuit selon la revendication 9, **caractérisé en ce que** l'unité d'évaluation (12) destinée au transfert de l'indice d'inductance inverse (15) est reliée à l'unité de surveillance (25).

**Fig.1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2009103662 A1
- US 2007132415 A1
- AT 503602 B1

**In der Beschreibung aufgeführte Nicht-Patentliteratur**

- Sensorless Control of A.C. Machines. **SCHRÖDL,M.** VDI Fortschrittberichte. VDI-Verlag, 1992, vol. 21
- **RAJASHEKARA, K. et al.** Sensorless Control of AC Motor Drives. IEEE Press, 1996
- **VON CARUANA C.** *sensorless flux position estimation at low and zero frequency by measuring zero-sequence current in delta connected cage induction machines,* ISBN 978/0-7803-7883-4
- **OSWALD, B.** Berechnung von Drehstromnetzen - Berechnung stationärer und nichtstationärer Vorgänge mit Symmetrischen Komponenten und Raumzeigern. *Vieweg + Teubner,* 2009, ISBN 978-3-8348-0617-8